# EUROPÄISCHE PATENTSCHRIFT

(11) **EP 0 824 478 B1**
(45) Veröffentlichungstag und Bekanntmachung des Hinweises auf die Patenterteilung: **12.12.2001**
(21) Anmeldenummer: 96907981.3
(22) Anmeldetag: 15.04.1996
(51) Int. Cl.: B65D 75/28, B42D 15/10, A45D 40/00, B31D 1/00

(54) **VERFAHREN ZUM HERSTELLEN VON AN EINEM TRÄGER GEHALTENEN PRODUKTEN, WIE KREDIT-, IDENTIFIKATIONS- UND AUSWEISKARTEN UND DERGLEICHEN**
PROCESS FOR PRODUCING PRODUCTS SECURED TO A SUBSTRATE, LIKE CREDIT AND IDENTITY CARDS AND LIKE
PROCEDE D''OBTENTION D'ARTICLES MAINTENUS SUR UN SUPPORT, TELS QUE DES CARTES DE CREDIT, D'IDENTITE ET ANALOGUE

(30) Priorität: 04.05.1995 CH 128795
(43) Veröffentlichungstag der Anmeldung: 25.02.1998
(73) Patentinhaber: Hunkeler AG Papierverarbeitungsmaschinen, 4806 Wikon (CH)
(72) Erfinder: HUNKELER, Franz, CH-4800 Zofingen (CH)
(74) Vertreter: Patentanwälte Schaad, Balass, Menzl & Partner AG
(86) Internationale Anmeldenummer: CH9600133
(87) Internationale Veröffentlichungsnummer: WO9634808

(56) Entgegenhaltungen:
- EP-A- 0 263 327
- WO-A-92/14607
- WO-A-93/24031
- GB-A- 2 254 045
- GB-A- 2 269 340
- GB-A- 2 272 667
- US-A- 3 855 033
- US-A- 4 805 773
- US-A- 4 876 136
- US-A- 4 889 749
- US-A- 4 892 335
- US-A- 5 445 821

## Beschreibung

Die vorliegende Erfindung betrifft ein Verfahren zum Herstellen von an einem Träger gehaltenen Produkten, wie Kredit-, Identifikations- und Ausweiskarten und dergleichen, sowie die nach diesem Verfahren hergestellten Erzeugnisse.

Aus der GB-A- 2 272 667 ist bekannt, Kredit-, Ausweis-und Identifikationskarten in einen Träger so zu integrieren, dass die Karten herausgelöst werden können. Dabei ist ein Formblatt vorgesehen, das in einem ersten Teil eine Kartenzone mit entsprechendem Aufdruck und in einem zweiten Teil einen transparenten Film aufweist, der einerseits auf den zweiten Teil des Formblattes aufgeklebt und auf der anderen Seite mit einem Leim beschichtet ist, der nach dem Zusammenklappen der beiden Teile des Formblattes an der Kartenzone anhaftet. Die Herstellung einer Karte gemäss diesem Verfahren ist sehr aufwendig, da insbesondere zum Aufbringen des Films und der notwendigen Leimschichten mehrere Arbeitsgänge notwendig sind. Die Kartenzone weist gemäss der GB-A- 2 272 667 zudem zwei durch eine Faltlinie geteilte Seiten auf, die nach dem Falten die Front- und Rückseite der Karte bilden. Das Falten und Verleimen der Kartenteile kann jedoch erst erfolgen, nachdem die Karte aus dem Formblatt herausgetrennt wurde. Die maschinelle Herstellung der Karte ist daher mit einem hohen Aufwand verbunden.

Der vorliegenden Erfindung liegt nun die Aufgabe zugrunde, ein Verfahren der eingangs genannten Art zu schaffen, das die Herstellung von in einen Träger integrierten Produkten auf einfache und kostengünstige Weise ermöglicht.

Diese Aufgabe wird auf die im Anspruch 1 umschriebene Weise gelöst.

Besonders bevorzugte Weiterausgestaltungen des erfindungsgemässen Verfahrens bilden Gegenstand der abhängigen Ansprüche 2-8.

Bevorzugte Erzeugnisse, die nach dem erfindungsgemässen Verfahren hergestellt sind, zeichnen sich durch die Merkmale der Ansprüche 9-11 aus.

Anhand der Zeichnungen wird nachfolgend das erfindungsgemässe Verfahren näher erläutert. Es zeigen rein schematisch:
- Fig. 1 u.2: in Draufsicht verschiedene Phasen bei der Herstellung einer ersten Ausführungsform einer in einem Trägermaterial integrierten Karte,
- Fig. 3: einen Schnitt entlang der Linie XIII-XIII in Fig. 2,
- Fig.4 u.5: in einer den Fig. 1 und 2 entsprechenden Darstellung verschiedene Phasen bei der Herstellung einer zweiten Ausführungsform einer in einem Trägermaterial integrierten Karte,
- Fig. 6: einen Schnitt entlang der Linie XVI-XVI in Fig. 5, und
- Fig. 7: in einer der Fig. 4 entsprechenden Darstellung eine Phase bei der Herstellung einer dritten Ausführungsform einer in einem Trägermaterial integrierten Karte.

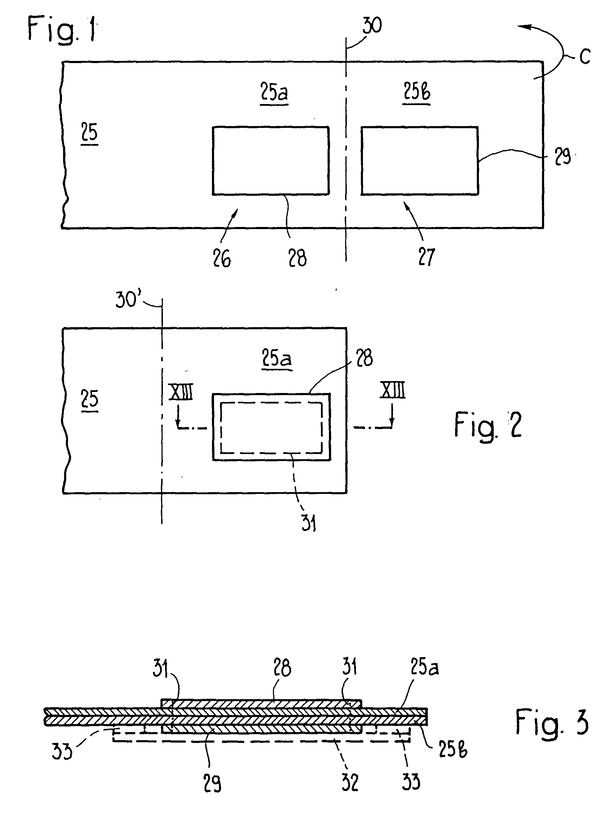

Im folgenden wird nun anhand der Fig. 1-3 beschrieben, wie eine in einem Trägermaterial 15 integrierte Karte (Kredit-, Identifikations-, Ausweiskarte oder dergleichen) hergestellt wird.

Wie Fig. 1 zeigt, werden auf zwei aneinandergrenzenden Abschnitten 25a, 25b eines Trägermaterials 25, das bedruckt sein kann, in benachbarten Bereichen 26, 27 Materialabschnitte 28, 29 aufgebracht, vorzugsweise aufgeklebt. Die Materialabschnitte 28, 29 sind vorzugsweise Folienabschnitte, die transparent oder undurchsichtig und gegebenenfalls auch bedruckt sein können. Anschliessend wird der Trägermaterialabschnitt 25b in Richtung des Pfeiles C um die Faltlinie 30 nach rückwärts umgefaltet, so dass die beiden Materialabschnitte 28, 29 aufeinander ausgerichtet sind, jedoch auf aufeinander abgekehrten Seiten des Trägermaterials 25 liegen. Die beiden übereinanderliegenden Bereiche 26, 27 bzw. die Trägermaterialabschnitte 25a, 25b (die im übrigen bedruckt sein können) werden auf geeignete Weise miteinander verbunden, vorzugsweise miteinander verklebt. Um die Karte aus dem Trägermaterial 25 herauslösen zu können wird nun eine geschlossene Schwächungslinie 31 (Fig. 2) erzeugt, die durch die ganze Sandwichkonstruktion, die in Fig. 3 ersichtlich ist, hindurchgeht. Wie diese Fig. 3 zeigt, liegen die beiden Trägermaterialabschnitte 25a, 25b direkt aufeinander. Auf den aussenliegenden Seiten dieser Trägermaterialabschnitte 25a, 25b sind die Materialabschnitte 28 und 29 aufgebracht, die sich überdecken. Dadurch, dass die Materialbahnabschnitte 25a, 25b aufeinanderliegen, wird eine grössere Dicke und Stabilität der Karte erreicht, was es ermöglicht, ein dünneres Trägermaterial 25 zu verwenden.

Anstatt wie beschrieben den Trägermaterialabschnitt 25b durch Zurückfalten mit dem Trägermaterialabschnitt 25a in Berührung zu bringen ist es auch möglich, den Trägermaterialabschnitt 25b entlang der Linie 30 abzutrennen und von hinten an den Trägermaterialabschnitt 25a anzulegen.

In Fig. 2 ist mit 30' eine weitere Falzlinie angedeutet, entlang der die übereinanderliegenden Trägermaterialabschnitte 25a, 25b nochmals, gegen das Trägermaterial 25 umgefaltet werden können.

Die Schwächungslinie (Perforationslinie) 31 muss so ausgebildet sein, dass die Karte zwar herausgetrennt werden kann, jedoch noch genügend stark im Trägermaterial 25 gehalten ist, so dass sie nicht herausfällt. In Fig. 3 ist gestrichelt eine zusätzliche Abdeckung 32 eingezeichnet, welche es erlaubt, die Schwächungslinie 31 als Stanz- oder Schnittlinie auszubilden. Die Karte wird mittels eines geeigneten Haft- oder Klebstoffes lösbar an dieser Abdeckung 32 gehalten, die mittels eines Klebstoffes 33 fest mit dem Trägermaterialabschnitt 25b verbunden ist. Diese Variante hat den Vorteil, dass die Karte nicht mehr über einzelne Verbindungsstege mit den Trägermaterialabschnitten 25a, 25b verbunden sein muss sondern mit dem Bilden der als Stanz- oder Schnittlinie ausgebildeten Schwächungslinie 31 von den Trägermaterialabschnitten 25a, 25b abgetrennt wird. Gehalten wird die Karte im Trägermaterial 25 durch Haftwirkung an der Abdeckung 32. Es ist noch anzumerken, dass die Schnittlinie 31 die Abdeckung 32 nicht durchsetzen darf.

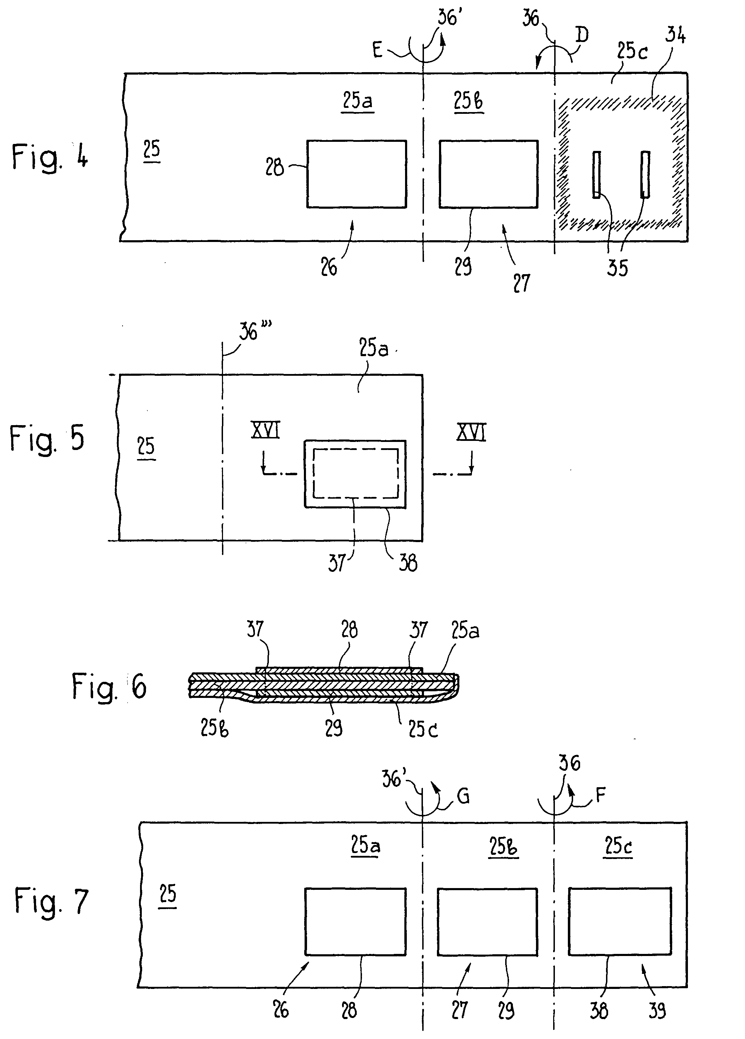

Das anhand der Fig. 4-6 nachfolgend beschriebene Verfahren ist dem Verfahren sehr ähnlich, wie es vorgängig anhand der Fig. 1-3 erläutert wurde.

In zwei nebeneinanderliegenden Bereichen 26, 27 werden ebenfalls zwei Materialabschnitte 28, 29 auf aneinandergrenzende Abschnitte 25a und 25b des Trägermaterials 25 aufgebracht. An den Trägermaterialabschnitt 25b schliesst noch ein weiterer Materialbahnabschnitt 25c an. Dieser Trägermaterialabschnitt 25c ist mit zwei Klebstoffaufträgen 34 und 35 versehen. Der Klebstoffauftrag 34 ist dabei so angeordnet und ausgebildet, dass er nach dem nachfolgenden Uebereinanderlegen der Trägermaterialabschnitte 25b und 25c um den Materialabschnitt 29 herum verläuft. Demgegenüber ist der Klebstoffauftrag 35 derart angeordnet und ausgebildet, dass er bei übereinandergelegten Trägermaterialabschnitten 25b und 25c mit dem Materialabschnitt 29 in Berührung kommt.

Wie bereits erwähnt wird zuerst der mit den Klebstoffaufträgen 34 und 35 versehene Trägermaterialabschnitt 25c in Richtung des Pfeiles D um die Linie 36 umgelegt und auf den Trägermaterialabschnitt 25b gelegt und mit diesem mittels des Klebstoffauftrages 34 verbunden. In einem nächsten Schritt werden die beiden übereinanderliegenden Trägermaterialabschnitte 25b und 25c in Richtung des Pfeiles E um die Linie 36' nach hinten umgefaltet und an den Trägermaterialabschnitt 25a angelegt. Die beiden aneinanderliegenden Trägermaterialabschnitte 25a und 25b werden wie anhand der Fig. 1 und 2 erläutert miteinander verbunden, vorzugsweise durch Verkleben.

Dann wird eine Schwächungslinie 37 angebracht, die als Stanz- oder Schnittlinie ausgebildet sein kann. Dabei ist darauf zu achten, dass diese Schwächungslinie 37 den Trägermaterialabschnitt 25c nicht durchsetzt.

Der Aufbau der so geschaffenen Sandwichkonstruktion lässt sich aus der Fig. 6 ersehen, in der der Uebersichtlichkeit halber die Klebstoffaufträge 34 und 35 jedoch nicht gezeigt sind. Die durch die Schwächungslinie 37 festgelegte Karte wird mittels des Klebstoffauftrages 35 lösbar am Trägermaterialabschnitt 25c gehalten und muss demzufolge mit den Trägermaterialabschnitten 25a und 25b nicht über Verbindungsstege verbunden sein.

In Fig. 5 ist mit einer weitern Linie 36"' angedeutet, dass die übereinanderliegenden Trägermaterialabschnitte 25a, 25b und 25c um diese Faltlinie 36"' herum gegen das Trägermaterial 25 umgefaltet werden können.

Bei der in Fig. 7 gezeigten Variante, die mit derjenigen gemäss den Figuren 4-6 eine gewisse Aehnlichkeit hat, schliesst an den Trägermaterialabschnitt 25b ebenfalls ein weiterer Trägermaterialabschnitt 25c an. In den Bereichen 26 und 27 werden auf die Trägermaterialabschnitte 25a und 25b wie bei den vorangehenden Ausführungsbeispielen Materialabschnitte 28 und 29 aufgebracht, die beim Endprodukt aussen liegen. Auf den äussersten Trägermaterialabschnitt 25c wird nun im mit 39 bezeichneten Bereich ebenfalls ein Materialabschnitt 38 aufgetragen, der z.B. eine gedruckte Schaltung oder einen gegebenenfalls verdeckten Code aufweisen kann. Die drei Trägermaterialabschnitte 25a, 25b und 25c werden dann derart ineinandergefaltet, dass der Materialabschnitt 38 innen zu liegen kommt, d.h. zwischen den Materialabschnitten 28 und 29 angeordnet ist. Um dies zu erreichen wird der Trägermaterialabschnitt 25c in einem ersten Schritt um die Linie 36 in Richtung des Pfeiles F nach hinten umgebogen, so dass er an der Rückseite des Trägermaterialabschnittes 25b zur Anlage kommt.
Anschliessend werden die beiden aneinanderliegenden und vorzugsweise durch Kleben miteinander verbundenen Trägermaterialabschnitte 25b und 25c in Richtung des Pfeiles G um die Linie 36' erneut nach hinten umgefaltet, so dass die beiden Trägermaterialabschnitte 25b und 25c in der Reihenfolge Abschnitt 25c und dann 25b hinter den Trägermaterialabschnitt 25a zu liegen kommen. Der Trägermaterialabschnitt 25c wird auf geeignete Weise, vorzugsweise ebenfalls durch Kleben, mit dem Trägermaterialabschnitt 25a verbunden. Schliesslich wird gleich wie bei den vorangehenden Ausführungsbeispielen die heraustrennbare Karte durch eine Schwächungslinie 37 festgelegt. Gegebenenfalls kann gleich wie in Fig. 3 gezeigt noch eine Abdeckung 32 vorgesehen werden, welche zum lösbaren Halten der heraustrennbaren Karte dient.

Bei den Ausführungsformen gemäss den Fig. 4-7 wird beim fertigen Produkt die eine Seite der Karte durch den Trägermaterialabschnitt 25c überdeckt. Auf diese Weise wird die von dieser Seite her sichtbare Information abgedeckt und erst nach dem Herauslösen der Karte zugänglich. Dies trifft auch bei der Ausführungsform gemäss Fig. 3 mit Abdeckung 32 zu sofern letzere undurchsichtig ist.

Die anhand der Fig. 1-7 beschriebenen Verfahren zur Herstellung einer heraustrennbaren Karte haben den Vorteil, dass die Materialabschnitte 28, 29 und 38 auf derselben Seite des Trägermaterials 25 auf dieses aufgebracht werden kann. Daher ist nur eine einzige Spendeeinheit erforderlich. Es ist auch möglich, statt zwei getrennte Materialabschnitte 28, 29 einen einzigen Materialabschnitt aufzubringen, der die Bereiche 26, 27 und den dazwischenliegenden Zwischenbereich abdeckt.

Vor dem Aufbringen der Materialabschnitte 28, 29 wird das Trägermaterial 25 in den Bereichen 26, 27 bedruckt. In diesem Fall werden durchsichtige Materialabschnitte 28, 29 verwendet, damit der Druck sichtbar ist.

Bei allen beschriebenen Ausführungsbeispielen ist im Trägermaterial 25, das eine Bahn aus Papier oder Kunststoff sein kann, nur eine einzige Karte vorgesehen. Es ist jedoch durchaus möglich, gleichzeitig im Trägermaterial 25 zwei oder mehr nebeneinander oder übereinander angeordnete Karten auszubilden. Wie beschrieben, können die Materialabschnitte 28, 29 auf derselben Seite des Trägermaterials 25 aufgebracht werden können, und zwar gleichzeitig oder zeitlich gestaffelt. Dadurch ist es möglich, mit einer einzigen Materialabschnittspendeeinheit auszukommen, ohne dass zum Aufbringen der Materialabschnitte 28, 29 ein Wenden des Trägermaterials 25 erforderlich ist.

## Patentansprüche

1. Verfahren zum Herstellen von an einem Träger herauslösbar gehaltenen Karten, wie Kredit-, Identifikations- und Ausweiskarten und dergleichen, **dadurch gekennzeichnet, dass** auf einem flachen Trägermaterial (25) zwei Bereiche (26, 27) durch Aufbringen von Materialabschnitten (28, 29) auf das Trägermaterial (25) vorbereitet werden, dass dann die beiden vorbereiteten Bereiche (26, 27) so übereinandergelegt werden, dass die Materialabschnitte (28, 29) nach aussen zu liegen kommen, dass die danach übereinanderliegenden Abschnitte (25a, 25b) des Trägermaterials (25) miteinander verbunden werden und dass durch die Erzeugung einer geschlossenen Schwächungslinie (31, 37), z.B. einer Perforationslinie, im Bereich der übereinanderliegenden Materialabschnitte (28, 29) eine heraustrennbare Karte festgelegt wird.

2. Verfahren nach Anspruch 1, **dadurch gekennzeichnet, dass** die beiden Bereiche (26, 27) auf derselben Seite des Trägermaterials (25) benachbart zueinander vorbereitet werden.

3. Verfahren nach Anspruch 1 oder 2, **dadurch gekennzeichnet, dass** die beiden vorbereiteten Bereiche (26, 27) durch Falten des Trägermaterials (25) entlang einer Linie (30; 36), zu der die beiden Bereiche (26, 27) symmetrisch liegen, übereinandergelegt werden.

4. Verfahren nach einem der Ansprüche 1-3, **dadurch gekennzeichnet, dass** auf das Trägermaterial (25) eine den einen der beiden Materialabschnitte (28, 29) überdeckende und mit diesem lösbar verbundene Abdeckung (32) aufgebracht wird, die durch die vorzugsweise als Stanz- oder Schnittlinie ausgebildete Schwächungslinie (31) nicht durchsetzt wird.

5. Verfahren nach einem der Ansprüche 1-3, **dadurch gekennzeichnet, dass** ein weiterer Abschnitt (25c) des Trägermaterials (25) über einen der beiden Materialabschnitte (28, 29) gelegt wird, vorzugsweise durch Umfalten, und dieser weitere Trägermaterialabschnitt (25c) mit dem übrigen Trägermaterial (25) fest und mit dem überdeckten Materialabschnitt (29) lösbar verbunden wird, wobei die vorzugsweise als Stanz- oder Schnittlinie ausgebildete Schwächungslinie (37) so angebracht wird, dass sie den weiteren Trägermaterialabschnitt (25c) nicht durchsetzt.

6. Verfahren nach einem der Ansprüche 1-3, **dadurch gekennzeichnet, dass** auf einem weiteren Abschnitt (25c) des Trägermaterials (25) durch Aufbringen eines Materialabschnittes (38) ein weiterer Bereich (39) vorbereitet wird, der vorzugsweise durch Umlegen des weiteren Trägermaterialabschnittes (25c) gegenüber den beiden anderen Materialabschnitten (28, 29) im wesentlichen deckungsgleich zwischen letztere eingelegt wird.

7. Verfahren nach einem der Ansprüche 1-6, **dadurch gekennzeichnet, dass** die auf das Trägermaterial (25) aufgebrachten Materialabschnitte (28, 29) transparent oder undurchsichtig und/oder bedruckt sind und vorzugsweise Folienabschnitte sind.

8. Verfahren nach Anspruch 6, **dadurch gekennzeichnet, dass** der auf den weiteren Abschnitt (25c) des Trägermaterials (25) aufgebrachte Materialabschnitt (38) als Datenträger ausgebildet wird. An einem Träger herauslösbar gehaltene Karte, wie

9. An einem Träger herauslösbar gehaltene Karte, wie Kredit-, Identifikations- oder Ausweiskarte, hergestellt nach dem Verfahren gemäss einem der Ansprüche 1-8, wobei auf den Aussenseiten von zwei übereinanderliegenden, miteinander verbundenen Abschnitten (25a, 25b) eines Trägermaterials (25) je ein Materialabschnitt (28, bzw. 29) befestigt ist, der auf den andern Materialabschnitt (29 bzw. 28) ausgerichtet ist.

10. Karte nach Anspruch 9, **dadurch gekennzeichnet, dass** zwischen den beiden übereinanderliegenden Trägermaterialabschnitten (25a; 25b) ein weiterer Materialabschnitt (38) angeordnet ist, der auf die beiden anderen Materialabschnitte (28, 29) ausgerichtet ist und der vorzugsweise an einem weiteren Abschnitt (25c) des Trägermaterials (25) befestigt ist, der zwischen den beiden anderen Trägermaterialabschnitten (25a, 25b) angeordnet ist.

11. Karte nach Anspruch 10, **dadurch gekennzeichnet, dass** der weitere Materialabschnitt (38) ein Datenträger ist.

## Claims

1. A process for producing credit cards, identification cards, ID cards and the like, held on a carrier such that they can be broken out, wherein two regions (26, 27) are prepared on a flat carrier material (25) by applying sections of material (28, 29) to the carrier material (25) wherein the two prepared regions (26, 27) are placed one over the other in such a way that the sections of material (28, 29) come to lie on the outside and the sections (25a, 25b) of the carrier material (25) lying one over the other are joined to each other and wherein a product which can be broken out is fixed by a closed line of weakness (31, 37), for example a perforated line, in the region of the sections of material (28, 29) lying one over the other.

2. The process as claimed in claim 1, wherein the two regions (26, 27) are prepared neighbouring each other on the same side of the carrier material (25).

3. The process as claimed in claim 1 or 2, wherein the two prepared regions (26, 27) are placed one over the other by folding the carrier material (25) along a line (30; 36), with respect to which the two regions (26, 27) lie symmetrically.

4. The process as claimed in one of claims 1-3, wherein a covering (32), which covers one of the two sections of material (28, 29) and is releasably joined to said section, and which is not passed through by the line of weakness (31), preferably formed as a punched or cut line, is applied to the carrier material (25).

5. The process as claimed in one of claims 1-3, wherein one section (25c) of the carrier material (25) is placed over one of the two sections of material (28, 29), preferably by folding over, and this section of carrier material (25c) is joined firmly to the remaining carrier material (25) and releasably to the covered section of material (29), the line of weakness (37), preferably formed as a punched or cut line, being provided in such a way that it does not pass through the section of carrier material (25c).

6. The process as claimed in one of claims 1-3, wherein a further region (39) is prepared on a further section (25c) of the carrier material (25) by applying a section of material (38), and, preferably by folding over the further section of carrier material (25c), said further region is placed in between the two other sections of material (28, 29) substantially congruently with them.

7. The process as claimed in one of claims 1-6, wherein the sections of material (28, 29) applied to the carrier material (25) are transparent or opaque and/or bear printing and are preferably sections of film.

8. The process as clamed in claim 6, wherein the further section of material (38) applied to the further section (25c) of the carrier material (25) is formed as a data carier.

9. A credit card, identification card or ID card held on a carrier such that it can be broken out produced by the process as claimed in one of claims 1-8, wherein, on the outer sides of two sections (25a, 25b) of a carrier material (25) lying one over the other and joined to each other there is attached in each case a section of material (28 and 29, respectively), which is aligned with the other section of material (29 and 28, respectively).

10. The card as claimed in claim 9, wherein between the two sections of carrier material (25a; 25b) lying one over the other there is arranged a further section of material (38), which is aligned with the two other sections of material (28, 29) and is preferably attached to a further section (25c) of the carrier material (25), which is arranged between the two other sections of carrier material (25a, 25b).

11. The card is claimed in claim 10, wherein the further section of material (38) is a data carrier.

## Revendications

1. Procédé de fabrication de cartes maintenues de façon amovible sur un support, telles que des cartes de crédit, des cartes d'identification, des cartes d'identité et analogues, **caractérisé en ce que** l'on prépare, sur un matériau support plat (25), deux zones (26, 27) par application de sections de matériau (28, 29) sur le matériau support (25), **en ce que** les deux zones préparées (26, 27) sont alors superposées de telle sorte que les sections de matériau (28, 29) viennent se placer à l'extérieur, **en ce que** les sections ainsi superposées (25a, 25b) du matériau support (25) sont reliées l'une à l'autre et **en ce que**, en produisant une ligne d'affaiblissement fermée (31, 37), par exemple une ligne de perforations, on définit une carte séparable dans la zone des sections de matériau superposées (28, 29).

2. Procédé selon la revendication 1, **caractérisé en ce que** les deux zones (26, 27) qui se trouvent sur le même côté du matériau support (25) sont préparées au voisinage l'un de l'autre.

3. Procédé selon la revendication 1 ou 2, **caractérisé en ce que** les deux zones préparées (26, 27) sont superposées par pliage du matériau support (25) selon une ligne (30; 36) par rapport a laquelle les deux zones (26, 27) sont symétriques.

4. Procédé selon l'une quelconque des revendications 1-3, **caractérisé en ce que**, sur le matériau support (25), est appliqué un revêtement (32) recouvrant l'une des deux sections de matériau (28, 29) et relié de façon amovible à celle-ci, revêtement qui n'est pas traversé par la ligne d'affaiblissement (31) de préférence conformée en ligne poinçonnée ou en ligne de coupe.

5. Procédé selon l'une quelconque des revendications 1-3, **caractérisé en ce qu'**une autre section (25c) du matériau support (25) est appliquée sur une des deux sections de matériau (28, 29), de préférence par pliage, et cette autre section de matériau support (25c) est reliée de manière fixe au restant du matériau support (25) et de manière amovible à la section de matériau recouverte (29), la ligne d'affaiblissement (37) conformée de préférence en ligne estampée ou en ligne de coupe étant appliquée de sorte qu'elle ne traverse pas l'autre section de matériau support.

6. Procédé selon l'une quelconque des revendications 1-3, **caractérisé en ce qu'**on prépare, sur une autre section (25c) du matériau support (25), par application d'une section de matériau (38), une autre zone (39) qui, par pliage de l'autre section de matériau support (25c) par rapport aux deux autres sections de matériau (28, 29), est insérée entre ces dernières de manière à coïncider sensiblement.

7. Procédé selon l'une quelconque des revendications 1-6, **caractérisé en ce que** les sections de matériau (28, 29) appliquées sur le matériau support (25) sont transparentes ou opaques et/ou imprimées et sont de préférence des sections en feuille.

8. Procédé selon la revendication 6, **caractérisé en ce que** la section de matériau (38) appliquée sur l'autre section (25c) du matériau support (25) se présente sous la forme d'un support de données.

9. Carte maintenue de manière amovible sur un support, telle qu'une carte de crédit, carte d'identification ou carte d'identité, fabriquée selon le procédé selon l'une quelconque des revendications 1-8, dans laquelle, sur les côtés extérieurs de deux sections (25a, 25b) d'un matériau support (25) reliées l'une à l'autre est fixée à chaque fois une section de matériau (28 ou 29) qui est alignée sur l'autre section de matériau (29 ou 28).

10. Carte selon la revendication 9, **caractérisée en ce qu'**entre les deux sections de matériau support superposées (25a; 25b) est disposée une autre section de matériau (38) qui est alignée sur les deux autres sections de matériau (28, 29) et est fixée de préférence à une autre section (25c) du matériau support, qui est disposée entre les deux autres sections de matériau support (25a, 25b).

11. Carte selon la revendication 10, **caractérisée en ce que** l'autre section de matériau (38) est un support de données.
